# EUROPÄISCHE PATENTSCHRIFT

(11) **EP 3 509 174 B1**
(45) Veröffentlichungstag und Bekanntmachung des Hinweises auf die Patenterteilung: **28.07.2021**
(21) Anmeldenummer: 18210348.1
(22) Anmeldetag: 05.12.2018
(51) Int. Cl.: H02G 3/06, H02G 3/08, F16B 7/18, F16B 2/22

(54) **VERBINDER FÜR KABELKANÄLE**
CONNECTOR FOR CABLE CHANNELS
CONNECTEUR POUR CHEMINS DE CÂBLES

(30) Priorität: 04.01.2018 DE 102018200069
(43) Veröffentlichungstag der Anmeldung: 10.07.2019
(73) Patentinhaber: Robert Bosch GmbH, 70442 Stuttgart (DE)
(72) Erfinder: Hinderer, Mario, 74427 Fichtenberg Ot Langert (DE); Velten, Herbert, 71732 Tamm (DE); Willi, Marco, 71726 Benningen Am Neckar (DE); Bhadya, Shyam Sunder, 97816 Lohr am Main (DE); Radhakrishnan, Chandrashekar, 560 103 Bangalore (IN)

(56) Entgegenhaltungen:
- EP-A1- 1 892 809
- EP-A2- 0 409 807
- DE-A1- 19 509 398
- DE-A1-102013 005 212

## Beschreibung

Die Erfindung betrifft Verbinder - so genannte Knoten - für Kabelkanäle oder Kabelführungsprofile gemäß dem Oberbegriff des Patentanspruchs 1.

In der Druckschrift "Mechanik-Grundelemente 13.2" aus dem Jahr 2017 der Anmelderin sind (ab Seite 3-42) Eckwinkel und Würfelverbinder offenbart, die zur Verbindung der Stirnflächen zweier oder mehrere Profile vorgesehen sind. Damit können Fachwerke zusammengesetzt werden, die z.B. Gestelle bilden. Diese dienen dann zur Befestigung weiteren Komponenten. Dabei sind die Profile und entsprechend auch die Verbinder nicht zur Aufnahme von elektrischen Leitungen oder Lichtleitern geeignet.

Die Druckschrift DE 10 2013 005 212 A1 offenbart ein würfelförmiges Verbindungsbauteil für mehrere Profilstäbe, die jeweils einen quadratischen Querschnitt haben.

Es sind auch Profile bekannt, die größere Innenräume bereitstellen, und die als Kabelkanäle dienen. Die Innenräume können seitlich geöffnet werden, um elektrische Leitungen oder Lichtleiter einzulegen.

In der Offenlegungsschrift DE 10 2015 209 321 A1 und in der (oben bereits genannten) Druckschrift "Mechanik-Grundelemente 13.2" (ab Seite 11-3) sind Eckverbinder bzw. Kurvenelemente für Kabelkanäle offenbart, die ebenfalls entsprechende Innenräume bieten, in denen die elektrischen Kabel oder Lichtleiter verlegt werden können.

Nachteilig an derartigen Eckverbindern bzw. Kurvenelementen ist, dass sie lediglich zwei im Winkel zueinander angeordnete Kabelkanäle miteinander verbinden können, und dass ihre mechanische Belastbarkeit begrenzt ist.

In der Patentschrift DE 33 22 102 C2 sind Kurvenelemente und T-förmige Verbinder für Kabelkanäle gezeigt, wobei die Kabelkanäle mittels zusätzlicher Ausrichtelemente ausgerichtet werden müssen und zusätzliche Fugenabdeckungen vorgesehen sind. Damit sind die Verbinder vorrichtungstechnisch und fertigungstechnisch aufwändig und nur für die vorbestimmte Anzahl und Anordnung von Kabelkanälen nutzbar.

Die Druckschrift DE 195 09 398 A1 offenbart ein spielwürfelförmiges Verbindungsbauteil für mehrere Tragelemente, die jeweils einen kreisförmigen Querschnitt haben. Durch das Verbindungsbauteil können auch Leitungen verlegt werden.

Die Druckschrift EP 0 409 807 A2 offenbart einen würfelförmigen Verbinder für mehrere Kabelkanäle, die jeweils einen gleichen quadratischen Querschnitt haben.

Die Druckschrift EP 1 892 809 A1 offenbart einen quaderförmigen konfigurierbaren Verbinder für mehrere Kabelkanäle, die jeweils einen gleichen rechteckigen Querschnitt haben.

Dem gegenüber liegt der Erfindung die Aufgabe zu Grunde, einen stabilen Verbinder für Kabelkanäle zu schaffen, der vorrichtungstechnisch und fertigungstechnisch einfach ist. Insbesondere soll der Verbinder flexibel nutzbar sein und die Verbindung soll mechanisch belastbar sein.

Diese Aufgabe wird gelöst durch einen Verbinder für Kabelkanäle mit den Merkmalen des Patentanspruchs 1.

Weitere vorteilhafte Ausgestaltungen der Erfindung sind in den abhängigen Patentansprüchen beschrieben.

Der beanspruchte Verbinder dient zur Verbindung von zwei bis sechs Kabelkanälen, die vorzugsweise als Kabelführungsprofile aus Aluminium-Strangguss hergestellt sind. Der Verbinder weist einen Hauptkörper auf, an dem sechs ebene Anlagebereiche für Stirnflächen von Kabelkanälen vorgesehen sind, wobei alle Anlagebereiche zueinander rechtwinklig angeordnet sind. Der Hauptkörper hat eine würfelförmige Hüllgeometrie und ist vorzugsweise aus Metall und daher besonders stabil. Vier Anlagebereiche haben einen größeren quadratischen Hüllrahmen, und zwei Anlagebereiche haben einen kleineren rechteckigen Hüllrahmen Die Seitenlänge des größeren quadratischen Hüllrahmens ist gleich der längeren Seitenlänge des kleineren rechteckigen Hüllrahmens. Mit dem erfindungsgemäßen Verbinder können maximal sechs Kabelkanäle in verschiedenen Raumachsen miteinander verbunden werden. Wenn z.B. nur zwei Kabelkanäle miteinander verbunden werden sollen, sind alle erdenklichen Raumachsen möglich. Damit ist der Verbinder durch seine Mehrzahl von Anlagebereichen für die Verbindung von unterschiedlichen Zahlen von Kabelkanälen und für in unterschiedliche Richtungen gerichtete Kabelkanäle maximal flexibel einsetzbar. Die Stirnseiten der Kabelkanäle sind mittels Verschraubungen an den Anlagebereichen befestigbar. Damit sind mechanisch belastbare Verbindungen zwischen dem Verbinder und den Kabelkanälen herstellbar.

Erfindungsgemäß hat der Hauptkörper des Verbinders, der auch als 3/4 Knoten bezeichnet wird, vier Anlagebereiche, die den größeren quadratischen Hüllrahmen haben, und zwei Anlagebereiche, die den kleineren rechteckigen Hüllrahmen haben.

Bei einem nicht zur Erfindung gehörenden Beispiel eines Verbinders, der lediglich der Veranschaulichung dient, und der auch als ½ Knoten bezeichnet wird, weist der Hauptkörper insgesamt fünf Anlagebereiche auf, von denen ein Anlagebereich den größeren quadratischen Hüllrahmen hat, während die vier anderen Anlagebereiche den kleineren rechteckigen Hüllrahmen haben.

Bei einer besonders variabel einsetzbaren Weiterbildung des nicht zur Erfindung gehörenden Verbinders weist sein Hauptkörper eine quaderförmige Hüllgeometrie auf. Ein Innenraum des Hauptkörpers der ersten Ausführungsform ist vorzugsweise komplett hohl, womit maximaler Freiraum für die darin verlegten elektrischen Leitungen oder Lichtleiter gegeben ist.

Dabei wird es bevorzugt, wenn der größere Anlagebereich eine umlaufende Anlagefläche und eine mittlere als Kabelausnehmung dienende Durchgangsausnehmung aufweist. Die Durchgangsausnehmung ist also dem Anlagebereich zugeordnet. Die umlaufende Anlagefläche umgibt die Durchgangsausnehmung rahmenartig und vollumfänglich. Die vier kleineren Anlagebereiche weisen jeweils eine weitere Anlagefläche auf, an deren Rand eine jeweilige weitere Ausnehmung. Diese kann als Abschnitt einer Kabelausnehmung oder als Kabelausnehmung dienen. Die weiteren Ausnehmungen sind also dem jeweiligen Anlagebereich zugeordnet. Die umlaufende Anlagefläche des größeren Anlagebereiches ist außen von vier Kanten des Hauptkörpers begrenzt und hat somit einen quadratischen Außenrand. Die vier weiteren Anlageflächen sind jeweils von drei Kanten des Hauptkörpers und von dem Rand begrenzt.

Wenn die Ausgestaltung der Ränder der weiteren Ausnehmungen jeweils der Ausgestaltung eines Abschnitts des Randes der Durchgangsausnehmung entspricht, ist eine vorteilhafte Kompatibilität, z.B. für Kantenschützer gegeben.

Der Hauptkörper des erfindungsgemäßen Verbinders kann einstückig sein. Ein Innenraum des Hauptkörpers ist dann komplett hohl, womit maximaler Freiraum für die darin verlegten elektrischen Leitungen oder Lichtleiter gegeben ist.

Vorzugsweise weisen zwei der vier größeren Anlagebereiche jeweils eine umlaufende Anlagefläche und eine als Kabelausnehmung dienende mittlere Durchgangsausnehmung auf. Die umlaufenden Anlageflächen umgeben die jeweilige Durchgangsausnehmung rahmenartig und vollumfänglich. Zwei der vier größeren Anlagebereiche weisen jeweils eine weitere Anlagefläche auf, an deren Rand eine jeweilige weitere Ausnehmung gebildet ist. Die beiden kleineren Anlagebereiche weisen ebenfalls jeweils eine weitere Anlagefläche auf, an deren Rand eine jeweilige weitere Ausnehmung gebildet ist. Diese vier weiteren Ausnehmungen können als Kabelausnehmung oder als Abschnitt einer Kabelausnehmung dienen. Die beiden umlaufenden Anlageflächen und die beiden weiteren Anlageflächen der größeren Anlagebereiche sind außen jeweils von vier Kanten des Hauptkörpers begrenzt. Die beiden weiteren Anlageflächen der beiden kleineren Anlagebereiche sind jeweils von drei Kanten des Hauptkörpers, und von dem Rand begrenzt.

Wenn die Ausgestaltung der Ränder der weiteren Ausnehmungen jeweils einem Abschnitt der Ränder der Durchgangsausnehmungen entspricht, ist eine vorteilhafte Kompatibilität, z.B. für Kantenschützer gegeben.

An den Hauptkörper des erfindungsgemäßen Verbinders kann ein Ergänzungsteil angesetzt sein, das einen oder zwei Anschlusswinkel bildet. Der bzw. die Anschlusswinkel ergänzen jeweils eine der an einem größeren Anlagebereich gebildeten weiteren Anlageflächen zu einer umlaufenden Anlagefläche. Damit ergänzt der oder die Anschlusswinkel auch die eine oder die beiden zugeordneten weiteren Ausnehmungen zu jeweiligen Durchgangsausnehmungen.

Aus Gründen der Kompatibilität und der Flexibilität beim Einbau des erfindungsgemäßen Verbinders sind die Ausnehmungen vorzugsweise kreisförmig bzw. kreisbogenförmig. Genauer gesagt ist bei dem nicht zur Erfindung gehörenden Beispiel des Hauptkörpers der Rand der einen Durchgangsausnehmung und beim erfindungsgemäßen Hauptkörper sind die beiden Ränder der Durchgangsausnehmungen kreisförmig, und die Ränder der vier weiteren Ausnehmungen sind kreisbogenförmig.

Wenn die Stirnflächen der Kabelkanäle entsprechende Einschraubmöglichkeiten haben, können die Kabelkanäle mittels Schrauben, insbesondere Schneidschrauben, an den verschiedenen Anlageflächen des Verbinders befestigt werden. Die Einschraubmöglichkeiten können Löcher oder angepasste Hohlräume sein. Dazu weist jede umlaufende Anlagefläche vier Durchgangslöcher, und/oder jede weitere Anlagefläche zwei oder drei Durchgangslöcher auf. Genauer gesagt können die beiden größeren weiteren Anlageflächen jeweils drei Durchgangslöcher und die beiden kleineren weiteren Anlageflächen jeweils zwei Durchgangslöcher aufweisen.

An mindestens einem der Ränder, vorzugsweise an allen Rändern kann ein Kantenschutz zur Schonung des Randes und / oder des durchzuziehenden Kabels vorgesehen sein.

Der Kantenschutz kann an einem Kantenschutzelement gebildet sein, das an dem betroffenen Rand z.B. per Clips befestigbar ist.

Beim erfindungsgemäßen Hauptkörper mit Ergänzungsteil kann für zwei der weiteren Ausnehmungen der jeweilige Kantenschutz auch am Ergänzungsteil gebildet sein. Wenn das Ergänzungsteil an den Hauptkörper angesetzt wird, werden die beiden Kantenschützer in die beiden weiteren Ausnehmungen eingesetzt.

Diejenigen Anlagebereiche des Verbinders, an die keine Stirnflächen von Kabelkanälen angesetzt werden, werden aus optischen Gründen vorzugsweise mit quadratischen Abdeckplatten abgedeckt. Dazu werden vorzugsweise Zapfen der Abdeckplatte der in die Durchgangslöcher eingeklipst. Einer der Anlagebereiche mit quadratischem Hüllrahmen kann auch für eine Halteplatte oder Bodenplatte verwendet werden, an der ein Fuß befestigt sein kann. Die Halteplatte bzw. Bodenplatte wird vorzugsweise angeschraubt. Dazu werden die Durchgangslöcher der Anlagefläche verwendet.

Wenn die Stirnfläche des zu befestigenden Kabelkanals einen quadratischen Hüllrahmen hat und dabei fünfeckig ist, ergibt sich eine dreieckige Differenzfläche zwischen der Stirnfläche und dem zugeordneten quadratischen Hüllrahmen des Hauptkörpers - gegebenenfalls einschließlich seines Ergänzungselements. Aus prinzipiell vergleichbare Weise kann sich eine dreieckige Differenzfläche zwischen der Bodenplatte und dem zugeordneten quadratischen Hüllrahmen des Hauptkörpers - gegebenenfalls einschließlich seines Ergänzungselements - ergeben. Diese Differenzflächen werden vorzugsweise mittels entsprechender dreieckiger Abdeckplättchen abgedeckt. Die dreieckigen Abdeckplättchen werden vorzugsweise über einen Zapfen des jeweiligen Deckplättchens in ein Durchgangsloch der Anlagefläche eingeklipst.

Vorzugsweise werden an die größeren Anlagebereiche mit größerem quadratischem Hüllrahmen Kabelkanäle montiert, deren Stirnflächen einen gleichgroßen quadratischen Hüllrahmen haben. Vorzugsweise werden an die kleineren Anlagebereiche mit rechteckigem Hüllrahmen Kabelkanäle montiert, deren Stirnflächen ebenfalls einen kleineren rechteckigen Hüllrahmen haben.

Auf Grund der flexiblen Nutzbarkeit des erfindungsgemäßen Verbinders ist es auch möglich, an einen Anlagebereich mit kleinem rechteckigem Hüllrahmen eine Stirnfläche eines Kabelkanals mit größerem quadratischem Hüllrahmen zu montieren, dann wird es bevorzugt, wenn der Kabelkanal eine innere Stützstruktur aufweist, die in Anlage mit dem kleinen rechteckigen Hüllrahmen des Verbinders kommt und daran befestigt wird.

Auf Grund der flexiblen Nutzbarkeit des erfindungsgemäßen Verbinders ist es auch möglich, an einen Anlagebereich mit großem quadratischem Hüllrahmen eine Stirnfläche eines Kabelkanals mit kleinerem rechteckigem Hüllrahmen zu montieren, dann kann die rechteckige Differenzfläche mit einer rechteckigen Abdeckplatte abgedeckt werden.

Mehrere Ausführungsbeispiele eines erfindungsgemäßen Verbinders für Kabelkanäle sind in den Figuren dargestellt.

Es zeigen
Figur 1 ein erstes Ausführungsbeispiel des erfindungsgemäßen Verbinders mit drei Kabelkanälen in einer Explosionszeichnung,
Figur 2 einen Hauptkörper des Verbinders aus Figur 1 in einer perspektivischen Ansicht,
Figur 3 ein Ergänzungsteil des Verbinders aus Figur 1 in einer perspektivischen Ansicht,
Figur 4 ein nicht zur Erfindung gehörendes Beispiel eines Verbinders mit zwei Kabelkanälen in einer Explosionszeichnung, der lediglich der Veranschaulichung dient,
Figur 5 einen Hauptkörper des Verbinders aus Figur 4 in einer perspektivischen Ansicht, die lediglich der Veranschaulichung dient,
Figur 6 einen Hauptkörper in einer zweiteiligen Variante in einer perspektivischen Ansicht,
Figur 7 ein alternatives Ergänzungsteil in einer perspektivischen Ansicht, und
Figur 8 ein Kantenschutzelement in einer perspektivischen Ansicht.

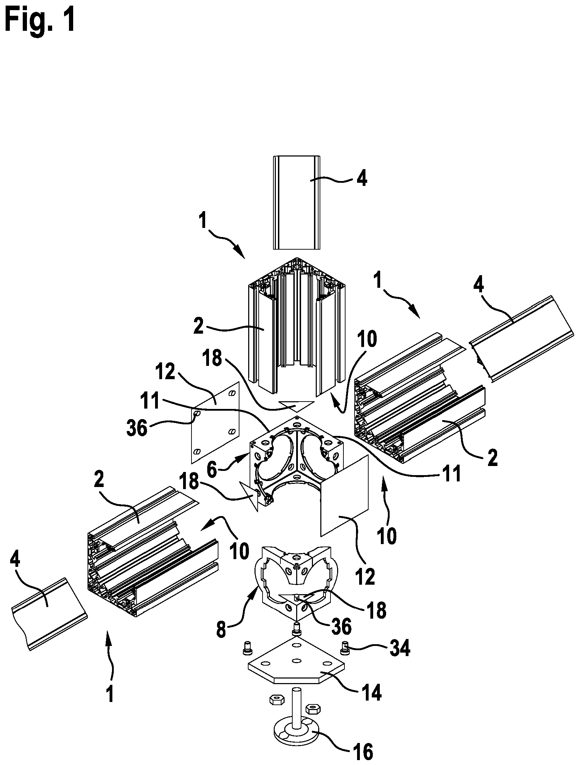

Figur 1 zeigt ein erstes Ausführungsbeispiel des erfindungsgemäßen Verbinders mit drei Kabelkanälen 1 in einer Explosionszeichnung. Zwei der Kabelkanäle 1 sind in bei dieser Anwendung des Verbinders einer gleichen Richtung und zueinander fluchtend angeordnet, während der dritte Kabelkanal 1 senkrecht dazu angeordnet ist. Jeder Kabelkanal 1 hat einen Grundkörper 2, der als Alu-Strangpressprofil hergestellt ist, und einen Deckel 4. Der Grundkörper 2 und damit der Kabelkanal 1 haben einen fünfeckigen Querschnitt und dabei einen quadratischen Hüllrahmen.

Wegen der quadratischen Hüllrahmen von Stirnflächen 10 der Kabelkanäle 1 hat auch der Verbinder die Form eines Würfels mit mehreren entsprechenden quadratischen Hüllrahmen 11. Genauer gesagt sind ein Hauptkörper 6 und ein Ergänzungsteil 8 vorgesehen, die gemeinsam eine würfelförmige Hüllgeometrie und die Kanten eines Würfels bilden. Dabei wird die in Figur 1 nach vorne aus der Zeichenebene heraus gerichtete Kante nicht vollständig von dem Ergänzungsteil 8 gebildet.

Damit hat der Verbinder sechs ebene quadratische Anlagebereiche, von denen beim gezeigten Ausführungsbeispiel an drei Anlagebereiche jeweils eine Stirnfläche 10 eines Grundkörpers 2 eines Kabelkanals 1 befestigt wird. An zwei Anlagebereiche wird jeweils eine quadratische Abdeckplatte 12 angesetzt. An den sechsten (in Figur 1 unteren) Anlagebereich wird eine Bodenplatte 14 befestigt, an deren vom Verbinder abgewandten Seite ein Fuß 16 befestigt wird. Die Bodenplatte 14 hat eine Form, die derjenigen der Stirnflächen 10 der Kabelkanäle 1 entspricht. Die Bodenplatte 14 und die Stirnflächen 10 haben jeweils eine fünfeckige Form und dabei einen quadratischen Hüllrahmen, dessen Größe derjenigen der größeren quadratischen Anlagebereiche des Verbinders entspricht. Damit verbleiben jeweils dreieckige Differenzflächen zwischen den Stirnflächen 10 bzw. der Bodenplatte 14 und dem entsprechenden Anlagebereich des Verbinders. Diese Differenzflächen werden durch jeweilige dreieckige Abdeckplättchen 18 abgedeckt.

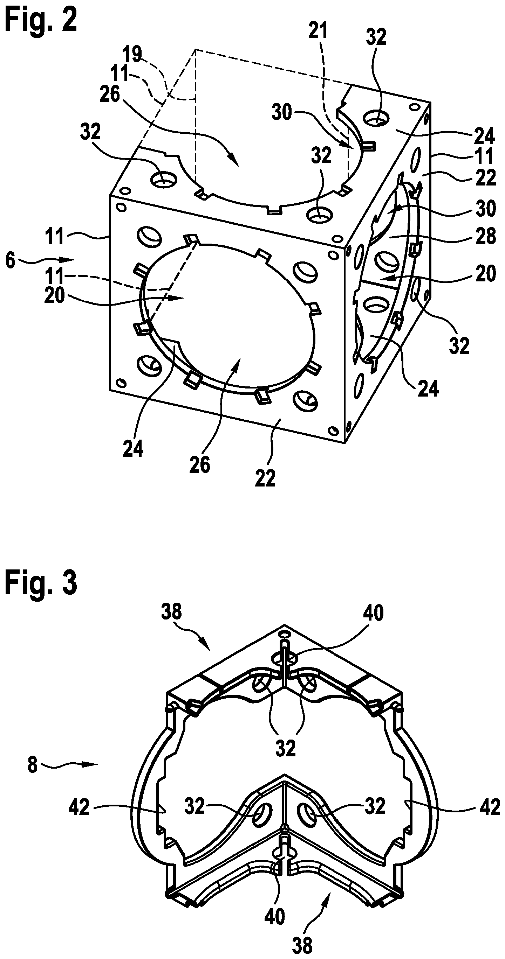

Figur 2 zeigt den Hauptkörper 6 des Verbinders aus Figur 1 in einer perspektivischen Darstellung. Er hat die bereits erwähnte würfelförmige Hüllgeometrie 19. An vier Seiten (in Figur 2 oben, unten, links vorne und rechts vorne) der insgesamt sechs Seiten der würfelförmigen Hüllgeometrie 19 sind jeweilige größere quadratische Hüllrahmen 11 bzw. Anlagebereiche vorgesehen. An zwei Seiten der würfelförmigen Hüllgeometrie 19 (in Figur 2 links hinten und rechts hinten) sind jeweilige kleinere rechteckige Hüllrahmen 21 bzw. Anlagebereiche vorgesehen, von denen in Figur 2 nur eine gestrichelte Begrenzung zu sehen ist.

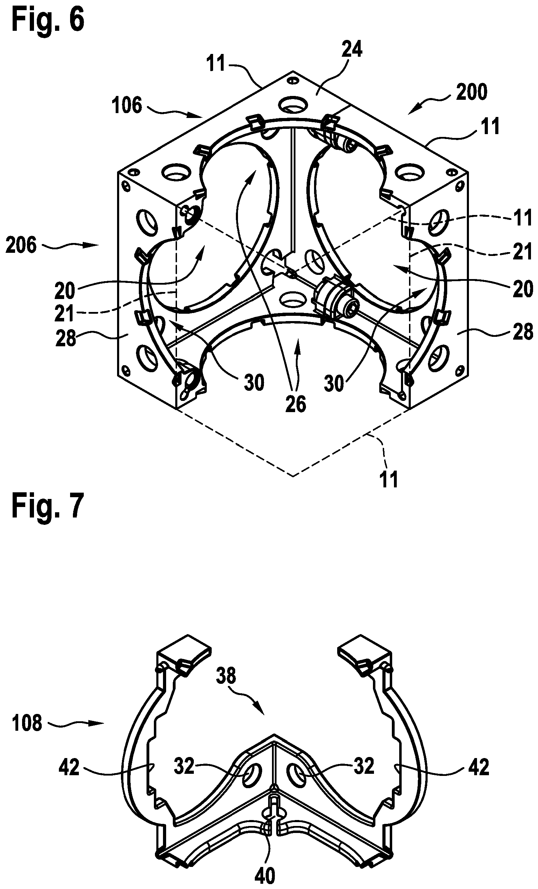

Zwei der insgesamt vier größeren quadratischen Anlagebereiche (in Figur 2 links vorne und rechts vorne) haben jeweils eine mittlere kreisrunde Durchgangsausnehmung 20 und eine darum umlaufende Anlagefläche 22. Die beiden anderen größeren quadratischen Anlagebereiche (in Figur 2 oben und unten) haben jeweils eine nicht umlaufende weitere Anlagefläche 24 und eine weitere Ausnehmung 26. Die beiden kleineren rechteckigen Anlagebereiche sind in der Darstellung gemäß Figur 2 verdeckt und werden daher mit Bezug zum Hauptkörper 206 aus Figur 6 erläutert. Dort sind (auf Grund der umgedrehten Darstellung) die beiden kleineren rechteckigen Anlagebereiche mit einer jeweiligen gestrichelten Begrenzungslinie zu erkennen. Diese Anlagebereiche haben jeweils eine weitere Anlagefläche 28 und eine weitere Ausnehmung 30.

Wieder mit Bezug zur Figur 2 ist zu erkennen, in allen vier Eckbereichen jeder Anlagefläche 22, 24, 28 ein Durchgangsloch 32 vorgesehen ist. Die Durchgangslöcher 32 dienen zur Befestigung des jeweiligen an dem Anlagebereich vorgesehenen Bauteils. In die Durchgangslöcher 32 werden zum Beispiel Schrauben 34 zur Befestigung der Bodenplatte 14 oder Zapfen 36 der Abdeckplatten 12 oder der Abdeckplättchen 18 eingesetzt. Weiterhin werden die Durchgangslöcher 32 insbesondere von nicht dargestellten Schrauben durchsetzt, die in die Stirnflächen 10 der Grundkörper 2 der Kabelkanäle 1 eingeschraubt werden.

Figur 3 zeigt das Ergänzungsteil 8 aus Figur 1 mit Blick auf seine Innenseite in einer perspektivischen Darstellung. Das Ergänzungsteil 8 hat zwei Anschlusswinkel 38, die die beiden weiteren Anlageflächen 24 (in Figur 2 oben und unten) zu umlaufenden Anlageflächen und die beiden zugeordneten weiteren Ausnehmungen 26 zu mittleren Durchgangsausnehmungen vervollständigen. Weiterhin vergrößern die beiden Anschlusswinkel 38 die beiden weiteren Anlageflächen 28 und stellen für jede Anlagefläche 28 ein drittes und ein viertes Durchgangsloch 32 zur Verfügung.

In den Ecken sind die Anschlusswinkel 38 geschlitzt, um die Elastizität des Ergänzungsteils 8 zu erhöhen. Dort sind auch weitere Löcher 40 vorgesehen, die in ihrer Größe, Anordnung und Funktion etwa den Durchgangslöchern 32 entsprechen.

Die beiden Anschlusswinkel 38 sind über zwei Kantenschützer 42 mit einander verbunden, die in die beiden weiteren Ausnehmungen 30 der beiden kleineren rechteckigen (in Figur 2 verdeckten) Anlagebereiche eingesetzt werden. Dort dienen sie zur Schonung der durchgezogenen elektrischen Leitungen bzw. der Lichtleiter (nicht gezeigt).

Das Ergänzungsteil 8 mit den beiden Anschlusswinkeln 38 und den beiden Kantenschützern 42 ist als einstückiges Kunststoffteil ausgebildet.

Der Hauptkörper 6 gemäß Figur 2 ist an seinem (in Figur 2 hinteren) Bereich offen, so dass die in den betroffenen Kabelkanälen 1 aufgenommenen elektrischen Leitungen und/oder Lichtleiter problemlos auch durch die mittleren Durchgangsausnehmungen 20 des Hauptkörpers 6 geführt werden können. Auch wenn danach das Ergänzungsteil 8 aus Figur 3 in den entsprechenden Bereich des Hauptkörpers 6 eingesetzt ist, verbleibt die eine offene Kante am so gebildeten Verbinder.

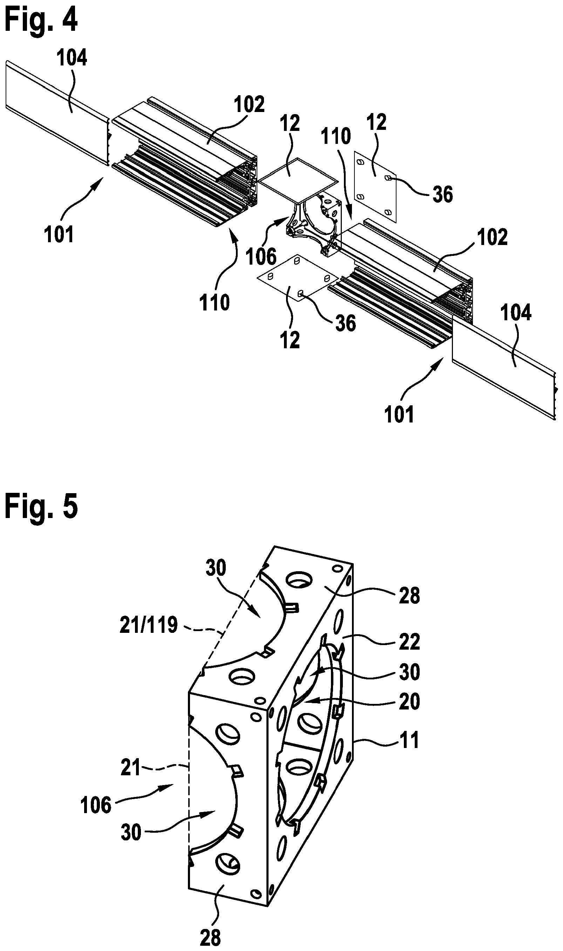

Figur 4 zeigt einen nicht zur Erfindung gehörenden Verbinder mit zwei einander gegenüberliegenden und dabei zueinander fluchtenden Kabelkanälen 101. Diese haben quadratische Stirnflächen 110, wobei an einer dem jeweiligen Deckel 104 gegenüberliegenden Seite im Innenraum des Grundkörpers 102 eine jeweilige Stützstruktur vorgesehen ist.

Der gezeigte Verbinder erzeugt eine stabile Verbindung zwischen den Kabelkanälen 101, indem der gezeigte Grundkörper 106 über jeweils zwei Schrauben mit der jeweiligen Stützstruktur des Grundkörpers 102 verbunden wird.

Figur 5 zeigt den Hauptkörper 106 aus Figur 4 in einer perspektivischen Ansicht. Dabei ist der Hauptkörper 106 gegenüber demjenigen der erfindungsgemäßen Ausführungsform reduziert. Der Hauptkörper 106 hat eine quaderförmige Hüllgeometrie 119 und nur einen größeren quadratischen Anlagebereich mit einer umlaufenden Anlagefläche 22 und einer mittleren Durchgangsausnehmung 20 (in Figur 5 rechts). Weiterhin hat der Hauptkörper 106 vier (gleichmäßig am Umfang verteilte) kleinere rechteckige Anlagebereiche mit jeweils einer weiteren Anlagefläche 28 und einer weiteren Ausnehmung 30.

Gemäß Figur 4 ist an die umlaufende Anlagefläche 22 und an zwei der vier weiteren Anlageflächen 28 jeweils eine Abdeckplatte 12 über ihre jeweiligen Zapfen 36 befestigt.

An den beiden verbleibenden Anlageflächen 28 sind die jeweiligen Kabelkanäle 101, genauer gesagt die jeweiligen Stützstrukturen der Grundkörper 102 über jeweils zwei (nicht gezeigte) Schrauben befestigt.

Einer der beiden Deckel 104 der Kabelkanäle 101 ist derart verlängert, dass er die sechste Seite des Verbinders abdeckt bzw. bildet.

Figur 6 zeigt den erfindungsgemäßen Hauptkörper 206 gemäß einer Variante zum Hauptkörper 6 aus Figur 2. Bei dieser Variante ist der Hauptkörper 206 zweiteilig ausgeführt. Genauer gesagt sind ein Hauptkörper 106 aus Figur 5 und ein ergänzender Hauptkörperabschnitt 200 zusammengesetzt. Dazu sind im Innenraum des Hauptkörpers 206 zwei Schraubverbindungen vorgesehen.

Figur 7 zeigt in einer perspektivischen Darstellung eine Variante des Ergänzungsteils 108. Dieses hat zwei Kantenschützer 42 und nur einen Anschlusswinkel 38 mit zwei Durchgangslöchern 32 und einem weiteren Loch 40. Das Ergänzungsteil 108 ist dabei für die erste Ausführungsform des Hauptkörpers 6 gemäß Figur 2 oder für dessen Variante 206 gemäß Figur 6 vorgesehen. Mit dem Ergänzungsteil 108 bleibt eine Ecke des Verbinders mit drei dazu benachbarten Kantenabschnitten offen. In diese Ecke kann ein (nicht gezeigter) Deckel eingesetzt werden, wenn drei der Kabelkanäle 1 gemäß Figur 1 direkt zueinander benachbart an den drei zur Ecke benachbarten Anlagebereichen angeordnet werden. Mit dem Ergänzungsteil 108 ist das Einführen der elektrischen Leitungen bzw. Lichtleiter gegenüber dem Ergänzungsteil 8 aus Figur 3 vereinfacht.

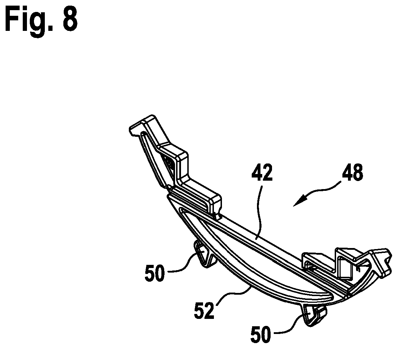

Figur 8 zeigt in einer perspektivischen Ansicht ein Kantenschutzelement 48 aus Kunststoff, das in die kreisförmigen oder kreisbogenförmigen Ausnehmungen 20, 26, 30 aller gezeigten Hauptkörper 6; 106; 206 eingesetzt werden kann. Das Kantenschutzelement 48 ist mit hakenartigen Klemmfortsätzen 50 versehen, die in Kerben eingeklipst werden können, die gleichmäßig an den Ausnehmungen 20, 26, 30 verteilt sind. Eine kreisbogenförmige äußere Umfangsfläche 52 des Kantenschutzelementes 48 liegt dann im Wesentlichen spaltfrei an der betroffenen Ausnehmung 20, 26, 30 an.

Offenbart ist ein Verbinder mit fünf oder sechs Anlageflächen für Kabelkanäle 1; 101, wobei die Kabelkanäle 1; 101 vorzugsweise im Wesentlichen quadratische Stirnflächen 10; 110 oder halb so große rechteckige Stirnflächen haben. Der Verbinder hat einen Hauptkörper 6; 106; 206 aus Metall, der eine oder zwei quadratische Anlageflächen 22 aufweist, und der bei der ersten Ausführungsform vier kleinere im Wesentlichen rechteckige Anlageflächen 28 aufweist.

### Bezugszeichenliste

- 1; 101: Kabelkanal
- 2; 102: Grundkörper
- 4; 104: Deckel
- 6; 106; 206: Hauptkörper
- 8; 108: Ergänzungsteil
- 10; 110: Stirnfläche
- 11: quadratischer Hüllrahmen
- 12: Abdeckplatte
- 14: Bodenplatte
- 16: Fuß
- 18: Abdeckplättchen
- 19: würfelförmige Hüllgeometrie
- 20: mittlere Durchgangsausnehmung
- 21: rechteckiger Hüllrahmen
- 22: umlaufende Anlagefläche
- 24: weitere Anlagefläche
- 26: weitere Ausnehmung
- 28: weitere Anlagefläche
- 30: weitere Ausnehmung
- 32: Durchgangsloch
- 34: Schraube
- 36: Zapfen
- 38: Anschlusswinkel
- 40: weiteres Loch
- 42: Kantenschutz
- 48: Kantenschutzelement
- 50: Klemmfortsatz
- 52: Umfangsfläche
- 119: quaderförmige Hüllgeometrie
- 200: Hauptkörperabschnitt

## Patentansprüche

1. Verbinder mit einem Hauptkörper (6; 206) mit würfelförmiger Hüllgeometrie (19), wobei an dem Hauptkörper (6; 206) sechs ebene Anlagebereiche für Stirnflächen (10; 110) von Kabelkanälen (1; 101) vorgesehen sind, wobei die Stirnflächen (10; 110) der Kabelkanäle (1; 101) mittels Verschraubungen an dem Verbinder befestigbar sind, und wobei alle Anlagebereiche rechtwinklig zueinander angeordnet sind, **dadurch gekennzeichnet, dass** vier Anlagebereiche einen größeren quadratischen Hüllrahmen (11) haben, und dass zwei Anlagebereiche einen kleineren rechteckigen Hüllrahmen (21) haben, wobei jede Seitenlänge des größeren quadratischen Hüllrahmens (11) der längeren Seitenlänge des kleineren rechteckigen Hüllrahmens (21) entspricht, und wobei eine Kante des Verbinders offen ist.

2. Verbinder nach Anspruch 1, wobei der Hauptkörper (206) zweiteilig ist.

3. Verbinder nach einem der Ansprüche 1 bis 2, wobei zwei der vier Anlagebereiche mit dem größeren quadratischen Hüllrahmen (11) jeweils eine umlaufende Anlagefläche (22) und eine mittlere Durchgangsausnehmung (20) aufweisen, wobei die umlaufenden Anlageflächen (22) die jeweilige Durchgangsausnehmung (20) rahmenartig und vollumfänglich umgeben, und wobei zwei der vier Anlagebereiche mit dem größeren quadratischen Hüllrahmen (11) jeweils eine weitere Anlagefläche (24) aufweisen, an deren Rand eine jeweilige weitere Ausnehmung (26) gebildet ist, und wobei die beiden Anlagebereiche mit dem kleineren rechteckigen Hüllrahmen (21) jeweils eine weitere Anlagefläche (28) aufweisen, an deren Rand ebenfalls eine jeweilige weitere Ausnehmung (30) gebildet ist.

4. Verbinder nach Anspruch 3, wobei an den Hauptkörper (6; 206) ein Ergänzungsteil (8; 108) angesetzt ist, das einen oder zwei Anschlusswinkel (38) aufweist, der oder die jeweils eine der weiteren Anlageflächen (24) zu einer umlaufenden Anlagefläche und die zugeordnete weitere Ausnehmung (26) zu einer Durchgangsausnehmung weiterbildet oder weiterbilden.

5. Verbinder nach Anspruch 3 oder 4, wobei der Rand der mittleren Durchgangsausnehmung (20) oder die Ränder der beiden mittleren Durchgangsausnehmungen (20) kreisförmig ist oder sind, und wobei die Ränder der vier weiteren Ausnehmungen (26, 30) kreisbogenförmig sind.

6. Verbinder nach einem der Ansprüche 3 bis 5, wobei für die Verschraubung jede umlaufende Anlagefläche vier Durchgangslöcher (32) aufweist, und/oder wobei für die Verschraubung jede weitere Anlagefläche zwei oder drei Durchgangslöcher (32) aufweist.

7. Verbinder nach Anspruch 6, wobei die Durchgangslöcher (32) von Schrauben durchsetzt sind, die in angepasste Hohlräume der Kabelkanäle (1; 101) eingesetzt sind.

8. Verbinder nach einem der Ansprüche 3 bis 7, wobei an dem Rand mindestens ein Kantenschutz (42) vorgesehen ist.

9. Verbinder nach Anspruch 8, wobei der Kantenschutz (42) an einem Kantenschutzelement (48) gebildet ist, das an dem Rand befestigbar ist.

10. Verbinder nach Anspruch 4 und nach Anspruch 8, wobei der Kantenschutz (42) am Ergänzungsteil (8; 108) gebildet ist.

11. Verbinder nach einem der vorhergehenden Ansprüche, mit mindestens einer quadratischen Abdeckplatte (12).

## Claims

1. Connector with a main body (6; 206) having a cube-shaped enveloping geometry (19), wherein six flat abutment regions for end faces (10; 110) of cable ducts (1; 101) are provided on the main body (6; 206), wherein the end faces (10; 110) of the cable ducts (1; 101) are capable of being attached to the connector by means of screw joints, and wherein all the abutment regions are arranged at right angles to one another, **characterized in that** four abutment regions have a larger square enveloping frame (11), and **in that** two abutment regions have a smaller rectangular enveloping frame (21), wherein each side length of the larger square enveloping frame (11) corresponds to the longer side length of the smaller rectangular enveloping frame (21), and wherein one edge of the connector is open.

2. Connector according to Claim 1, wherein the main body (206) is bipartite.

3. Connector according to either of Claims 1 and 2, wherein two of the four abutment regions with the larger square enveloping frame (11) each exhibit a peripheral abutment surface (22) and a central through-recess (20), wherein the peripheral abutment surfaces (22) surround the respective through-recess (20) in the manner of a frame and over its full extent, and wherein two of the four abutment regions with the larger square enveloping frame (11) each exhibit a further abutment surface (24), at the margin of which a respective further recess (26) is formed, and wherein the two abutment regions with the smaller rectangular enveloping frame (21) each exhibit a further abutment surface (28), at the margin of which likewise a respective further recess (30) is formed.

4. Connector according to Claim 3, wherein a complementary part (8; 108) has been applied onto the main body (6; 206), said complementary part exhibiting one or two connecting brackets (38) which in each instance develops/develop further the respective one of the further abutment surfaces (24) so as to form a peripheral abutment surface, and develops/develop further the assigned further recess (26) so as to form a through-recess.

5. Connector according to Claim 3 or 4, wherein the margin of the central through-recess (20) or the margins of the two central through-recesses (20) is/are circular, and wherein the margins of the four further recesses (26, 30) are arcuate.

6. Connector according to one of Claims 3 to 5, wherein, for the screw joint, each peripheral abutment surface exhibits four through-holes (32), and/or wherein, for the screw joint, each further abutment surface exhibits two or three through-holes (32).

7. Connector according to Claim 6, wherein the through-holes (32) are penetrated by screws which have been inserted into adapted cavities of the cable ducts (1; 101) .

8. Connector according to one of Claims 3 to 7, wherein at least one edge protection (42) is provided at the margin.

9. Connector according to Claim 8, wherein the edge protection (42) is formed on an edge-protection element (48) that is capable of being attached to the margin.

10. Connector according to Claim 4 and according to Claim 8, wherein the edge protection (42) is formed on the complementary part (8; 108).

11. Connector according to one of the preceding claims, with at least one square covering plate (12).

## Revendications

1. Connecteur, comprenant un corps principal (6 ; 206) ayant une géométrie d'enveloppe cubique (19), six zones d'application planes pour des surfaces frontales (10 ; 110) de chemins de câbles (1 ; 101) étant prévues sur le corps principal (6 ; 206), les surfaces frontales (10 ; 110) des chemins de câbles (1 ; 101) pouvant être fixées au connecteur au moyen de vissages, et toutes les zones d'application étant disposées à angle droit les unes par rapport aux autres, **caractérisé en ce que** quatre zones d'application disposent d'un cadre d'enveloppe carré plus grand (11), et **en ce que** deux zones d'application disposent d'un cadre d'enveloppe rectangulaire plus petit (21), chaque longueur du côté du cadre d'enveloppe carré plus grand (11) correspondant à la longueur du côté plus grande du cadre d'enveloppe rectangle plus petit (21), et une arête du connecteur étant ouverte.

2. Connecteur selon la revendication 1, dans lequel le corps principal (206) est composé de deux parties.

3. Connecteur selon l'une quelconque des revendications 1 et 2, dans lequel deux des quatre zones d'application dotées du cadre d'enveloppe carré plus grand (11) présentent respectivement une surface d'application périphérique (22) et un évidement de passage central (20), les surfaces d'application périphériques (22) entourant l'évidement de passage (20) respectif à la manière d'un cadre et sur toute la circonférence, et deux des quatre zones d'application dotées du cadre d'enveloppe carré plus grand (11) présentant respectivement une autre surface d'application (24) sur le bord de laquelle est formé un autre évidement (26) respectif, et les deux zones d'application dotées du cadre d'enveloppe rectangulaire plus petit (21) présentant respectivement une autre surface d'application (28) sur le bord de laquelle est également formé un autre évidement (30) respectif.

4. Connecteur selon la revendication 3, dans lequel une pièce complémentaire (8 ; 108) est appliquée au corps principal (6 ; 206) et présente un ou deux angles de raccordement (38) qui prolonge(nt) à chaque fois une surface respective des autres surfaces d'application (24) en une surface d'application périphérique et prolonge(nt) l'autre évidement (26) associé en un évidement traversant.

5. Connecteur selon la revendication 3 ou 4, dans lequel le bord de l'évidement traversant central (20) ou les bords des deux évidements traversants centraux (20) est/sont circulaire (s), et les bords des quatre autres évidements (26, 30) sont en forme d'arc de cercle.

6. Connecteur selon l'une quelconque des revendications 3 à 5, dans lequel chaque surface d'application périphérique présente pour le vissage quatre trous traversants (32), et/ou dans lequel chaque surface d'application supplémentaire présente pour le vissage deux ou trois trous traversants (32).

7. Connecteur selon la revendication 6, dans lequel les trous traversants (32) sont traversés par des vis qui sont insérées dans des cavités adaptées des chemins de câbles (1 ; 101).

8. Connecteur selon l'une quelconque des revendications 3 à 7, dans lequel au moins un dispositif de protection d'arête (42) est prévu sur le bord.

9. Connecteur selon la revendication 8, dans lequel le dispositif de protection d'arête (42) est formé sur un élément de protection d'arête (48) qui peut être fixé au bord.

10. Connecteur selon la revendication 4 et selon la revendication 8, dans lequel le dispositif de protection d'arête (42) est formé sur la pièce complémentaire (8 ; 108).

11. Connecteur selon l'une quelconque des revendications précédentes, comprenant au moins une plaque de recouvrement carrée (12).
